# EUROPÄISCHE PATENTANMELDUNG

(11) **EP 1 782 937 A2**
(43) Veröffentlichungstag der Anmeldung: **09.05.2007**
(21) Anmeldenummer: 06123295.5
(22) Anmeldetag: 31.10.2006
(51) Int. Cl.: B29C 47/00, B29C 47/02

(54) **Verfahren zur Umhüllung eines Hohlprofils mit Metallfolie**

(30) Priorität: 02.11.2005 DE 102005052612
(71) Anmelder: Hydro Aluminium Deutschland GmbH, 51149 Köln (DE)
(72) Erfinder: Schenkel, Willi, 41515 Grevenbroich (DE); Denkmann, Volker, 47906 Kempen (DE); Bales, Jakob, 41515 Grevenbroich (DE); Oetting, Wolf, 50823 Köln (DE)
(74) Vertreter: Cohausz & Florack

(57) **Zusammenfassung**

Die Erfindung betrifft ein Verfahren zur Herstellung eines Hohlprofilverbunds bestehend aus einem Hohlprofil aus Kunststoff und einer mit dem Hohlprofil kraft-, form- und/oder stoffschlüssig verbundenen Metallfolie, insbesondere aus Aluminium oder einer Aluminiumlegierung, bei welchem ein Hohlprofil unter Verwendung eines Extrusionsverfahrens kontinuierlich extrudiert wird, die Metallfolie von einem Coil abgewickelt wird und zumindest teilweise kontinuierlich auf das Hohlprofil aufgebracht wird sowie einen entsprechenden Kabelkanal aus extrudiertem Kunststoff. Die Aufgabe, ein Verfahren zur Herstellung eines Hohlprofilverbunds vorzuschlagen, welches bei geringerem apparativem Aufwand eine wirtschaftliche Herstellung von Hohlprofilverbunden gewährleistet, wird dadurch gelöst, dass das Hohlprofil extrudiert wird und das extrudierte Hohlprofil nach dem Kalibrieren und Abkühlen mit der Metallfolie beschichtet wird.

## Beschreibung

Die Erfindung betrifft ein Verfahren zur Herstellung eines Hohlprofilverbunds bestehend aus einem Hohlprofil aus Kunststoff und einer mit dem Hohlprofil kraft-, form- und/oder stoffschlüssig verbundenen Metallfolie, insbesondere aus Aluminium oder einer Aluminiumlegierung, bei welchem ein Hohlprofil unter Verwendung eines Extrusionsverfahrens kontinuierlich extrudiert wird, die Metallfolie von einem Coil abgewickelt wird und zumindest teilweise kontinuierlich auf das Hohlprofil aufgebracht wird sowie einen entsprechenden Kabelkanal aus extrudiertem Kunststoff.

Geschlossene oder offene Hohlprofile werden häufig bei Installationen eingesetzt, beispielsweise beim Verlegen von Stromleitungen und weisen daher häufig Oberflächen auf, welche insbesondere dekorativen Zwecken dienen. Ein typisches Beispiel für entsprechende Hohlprofile sind Kabelkanäle, welche konstruktive Leerräume für die Verlegung von Kabeln darstellen und in der Regel an der Wand, an Decken oder auf dem Fußboden verlegt werden. Die Kabelkanäle, Brüstungskanäle, Wand- oder Deckenkanäle werden in unterschiedlichen Ausführungen aus extrudiertem Kunststoff, zumeist PVC, einem stranggepressten Aluminium oder einem Stahlprofil hergestellt. Abhängig von der gewählten Ausführung werden Schalter- und Steckdosenelemente ebenso im Metall- oder Kunststoffdesign in die Kanäle eingebracht. Die aus Metall bestehenden Kabelkanäle sind im Vergleich zu den aus PVC hergestellten Kabelkanälen aufgrund der Material- bzw. Herstellkosten sehr teuer, so dass in der Regel auf die aus Kunststoff bestehenden Kabelkanäle zurückgegriffen wird.

Aus der deutschen Offenlegungsschrift DE 26 22 905 sind daneben Rollladenstäbe in Form von Hohlprofilverbunden bekannt, welche aus einem extrudierten, geschlossenen Hohlprofil und einem rollgeformten Metallband bestehen. Zur Herstellung des Hohlprofilverbunds wird das Metallband zunächst in seine Endform gerollformt und anschließend das Kunststoffhohlprofil in das Metallband hinein extrudiert. Dazu muss das Metallband der Extrusionsvorrichtung bzw. dem Extrusionswerkzeug, einer schlitzartigen Düse am Ausgang des Extruders, zugeführt werden, so dass der Kunststoff unmittelbar in das Metallband hinein extrudiert werden kann, ohne vorher zu erkalten. Das seit nunmehr 30 Jahren bekannte Verfahren hat sich jedoch, nach Kenntnisstand der Anmelderin, nicht durchgesetzt, da es erhebliche Nachteile aufweist.

Einerseits ist die kontinuierliche Zuführung des Metallbandes zur Extrusionsöffnung des Extruders aufwändig und bedarf einer extrem präzisen Prozessführung bei der Extrusion sowie der Zuführung des Metallbandes. Andererseits werden bei dem Extrusionsprozess zwei verschiedene Materialien, Kunststoff und Metall, bei sehr hohen Temperaturen oberhalb von 200 °C in Kontakt miteinander gebracht, welche sehr große Unterschiede hinsichtlich ihrer Ausdehnungskoeffizienten aufweisen. Hieraus resultiert nicht nur eine mangelnde Haftung des Metalls am Kunststoff, sondern durch den Schrumpf des Kunststoffes bedingt, sehr hohe Spannungen im Verbundteil, welche nachteilig für die Lebensdauer des gesamten Hohlprofilverbundes sein können. Beispielsweise kommt es in Bereichen des Kunststoffteils mit hohen Spannungen häufig zu Sprödbrüchen.

In der vorliegenden Anmeldung wird der Begriff Metallfolie synonym zum Begriff Metallband verwendet, da sich diese nur durch eine unterschiedliche Dicke unterscheiden. Geliefert werden Metallbänder aber auch Metallfolien vorzugsweise aufgewickelt auf einem Coil.

Von dem oben geschilderten Stand der Technik ausgehend liegt der Erfindung die Aufgabe zugrunde, ein Verfahren zur Herstellung eines Hohlprofilverbunds vorzuschlagen, welches bei geringerem apparativem Aufwand eine wirtschaftliche Herstellung von Hohlprofilverbunden gewährleistet. Darüber hinaus hat sich die Erfindung zur Aufgabe gestellt, einen kostengünstigen Kabelkanal mit metallischen Sichtflächen zur Verfügung zu stellen.

Gemäß einer ersten Lehre der vorliegenden Erfindung wird die oben aufgezeigte Aufgabe durch ein gattungsgemäßes Verfahren dadurch gelöst, dass das Hohlprofil extrudiert wird und das extrudierte Hohlprofil nach dem Kalibrieren und Abkühlen mit der Metallfolie beschichtet wird.

Nach Abschluss des Extrusionsverfahrens, d.h. nach dem Kalibrieren und abkühlen des extrudierten Kunststoffhohlprofils, ist die Temperatur des extrudierten Kunststoffhohlprofils wesentlich geringer als während des Extrudierprozesses. Damit wird gewährleistet, dass das extrudierte Hohlprofil insbesondere in den weiteren Konfektionierungs- und Bearbeitungsschritten formstabil bleibt. Beim Beschichten des extrudierten Hohlprofils aus Kunststoff mit der Metallfolie spielen die unterschiedlichen Ausdehnungskoeffizienten, welche beim Kunststoff insbesondere im plastischen Bereich um Größenordnungen über denen eines Metalls liegen, aufgrund der geringen Temperaturen nur eine untergeordnete Rolle, so dass bei der Beschichtung mit der Metallfolie weniger Spannungen in den Kunststoff eingebracht und eine bessere Haftverbindung zwischen der Metallfolie und dem Hohlprofil erzielt wird. Der Prozess ist insgesamt einfacher beherrschbar, da beispielsweise die Zuführgeschwindigkeit der Metallfolie an die Extrusionsgeschwindigkeit einfach, beispielsweise durch Messung der Geschwindigkeit des extrudierten Hohlprofils, angepasst werden kann.

Gemäß einer weitergebildeten Ausführungsform des erfindungsgemäßen Verfahrens wird die Metallfolie optional vorgeformt, unmittelbar nach Abschluss des Extrusionsverfahrens, d.h. nach dem Kalibrieren und Abkühlen oder nach einem dem Extrudieren folgenden Konfektionierungsschritt dem extrudierten Hohlprofil zugeführt, durch weiteres Rollformen in eine gewünschte Form gebracht und auf das extrudierte Hohlprofil aufgebracht. Das Extrusionsverfahren ist in der Regel dann beendet, wenn das extrudierte Profil nach einer Kalibrierung durch ein Wasserbad abgekühlt wird, so dass dieses formstabil bleibt. Wie bereits ausgeführt, weist das extrudierte Hohlprofil dann wesentlich geringere Temperaturen auf, welche eine prozesssichere Verbindung des Hohlprofils mit der Metallfolie gewährleistet. Darüber hinaus kann das extrudierte Hohlprofil vor dem Aufbringen der Metallfolie derart konfektioniert werden, dass beispielsweise Mittel zur Erdung der äußeren Metallfolie unmittelbar in das extrudierte Hohlprofil eingearbeitet werden.

Eine stoffschlüssige Verbindung zwischen der Metallfolie und dem extrudierten Hohlprofil kann vorzugsweise dadurch gewährleistet werden, dass die Metallfolie und/oder das extrudierte Hohlprofil zumindest teilweise auf den jeweiligen Kontaktflächen ein Haftmittel aufweist und die Metallfolie unter Verwendung von Kaschierwalzen auf das Hohlprofil aufkaschiert wird.

Wird, gemäß einer nächsten weitergebildeten Ausführungsform des erfindungsgemäßen Verfahrens, vor oder nach dem Vorverformen ein Haftmittel auf die Metallfolie aufgetragen, kann einerseits eine mit einer Haftmittelschicht bereits versehene Metallfolie eingesetzt werden und die Anzahl der Arbeitsschritte nach dem Extrudieren reduziert werden. Anderseits bleibt die Haftmittelschicht von der Vorverformung unbeeinflusst, wenn diese erst nach dem Vorverformen aufgetragen wird.

Vorzugsweise wird die Metallfolie kurz vor dem Aufkaschieren auf das extrudierte Hohlprofil einer Wärmebehandlung unterzogen, so dass ein wärmeaktivierbares Haftmittel verwendbar ist.

Wird durch die zusätzliche Wärmebehandlung nur die zur Aktivierung des Haftmittels notwendige Wärmeenergie in die Metallfolie eingebracht, kann die maximale Temperatur der Metallfolie beim Aufkaschieren auf ein Mindestmaß begrenzt werden.

Bevorzugt werden als Haftmittel ein Haftvermittler, ein Kleber, ein Lack und/oder ein Primer oder eine Klebefolie.

Das Verfahren zur Herstellung eines Hohlprofilverbunds wird, gemäß einer nächsten weitergebildeten Ausführungsform der Erfindung besonders flexibel dadurch weiter ausgestaltet, dass nach dem Aufkaschieren der Metallfolie der Hohlprofilverbund auf Länge geschnitten und/oder weiteren Fertigungs- und/oder Konfektionierungsschritten unterzogen wird.

Wird als Metallfolie eine Aluminiumfolie mit einer Dicke von 0,03 mm bis 1 mm, vorzugsweise von 0,05 mm bis 0,25 mm verwendet, wird einerseits die notwendige Umformbarkeit der Aluminiumfolie gewährleistet. Andererseits kann die Aluminiumfolie dann nicht nur zur Dekoration eingesetzt werden, sondern auch zur Versteifung des Hohlprofils genutzt werden. Dabei ergibt sich gegenüber der Verwendung von Metallfolien aus Stahl eine erheblich geringere Gewichtszunahme des Hohlprofilverbunds. In dem bevorzugten Dickenbereich ergibt sich hinsichtlich der Verarbeitbarkeit der Metallfolie ein besonders guter Kompromiss aus Umformbarkeit und Festigkeit der Folie.

Bevorzugt besteht die Aluminiumfolie aus einer Aluminiumlegierung vom Typ 1xxx oder vom Typ 3xxx, insbesondere einer Legierung vom Typ AA1050 oder AA1052. Diese Legierungen weisen nicht nur besonders gute Umformeigenschaften hinsichtlich des Rollformens auf, sondern stehen auch als kostengünstige Massenprodukte zur Verfügung. Daneben sind auch andere Aluminiumknetlegierungen vom Typ 4xxx, 5xxx, 6xxx, 7xxx und 8xxx sowie deren Modifikationen verwendbar.

Schließlich hat sich das erfindungsgemäße Verfahren als besonders Vorteilhaft erwiesen, sofern offene oder geschlossene Hohlprofile, insbesondere Kabelkanäle, Brüstungskanäle oder Rollladenstäbe extrudiert werden. Aus dem erfindungsgemäßen Verfahren ergeben sich insbesondere enorme Kostenvorteile aufgrund des geringen apparativen Aufwandes und der höheren Prozesssicherheit bei der Herstellung entsprechender Hohlprofile.

Gemäß einer zweiten Lehre der vorliegenden Erfindung wird die oben aufgezeigte Aufgabe durch einen nach dem erfindungsgemäßen Verfahren hergestellten Kabelkanal aus extrudiertem Kunststoff dadurch gelöst, dass der Kabelkanal zumindest auf einer seiner nach außen weisenden Oberflächen eine Metallfolie, insbesondere eine Aluminiumfolie, aufweist. Der erfindungsgemäße Kabelkanal besteht aus einem extrudierten Kunststoffprofil und einer Metallfolie, so dass dieser zwar das typische Design eines beispielsweise stranggepressten Aluminiumprofils aufweist, jedoch zu wesentlich geringeren Herstellungskosten gefertigt werden kann. Da der Kabelkanal als Hohlprofilverbund ausgeführt ist, weist dieser abhängig von der Dicke der eingesetzten Aluminiumfolie eine höhere Steifigkeit auf. Bei Verwendung des erfindungsgemäßen Verfahrens zur Herstellung des erfindungsgemäßen Kabelkanals kann dieser zudem sehr wirtschaftlich hergestellt werden.

Dies gilt insbesondere dann, wenn die Aluminiumfolie aus einer Aluminiumlegierung vom Typ 1xxx oder 3xxx, insbesondere aus einer Aluminiumlegierung vom Typ AA1050 oder vom Typ AA1052, besteht. Die genannten Aluminiumlegierungen lassen sich nicht nur leicht verarbeiten, sondern zeichnen sich zudem durch geringe Materialkosten aus.

Schließlich wird der erfindungsgemäße Kabelkanal dadurch weiterverbessert, dass dieser Anschlussmittel zur Erdung der auf der zumindest einen äußeren Oberfläche angeordneten Aluminiumfolie aufweist. Durch die Anschlussmittel können nachträglich durchzuführende Konfektionierungsmaßnahmen zur Erdung der Metallfolien gegenüber den im Kabelkanal geführten Leitungen, beispielsweise für elektrischen Strom, vermieden werden.

Es gibt nun eine Vielzahl von Möglichkeiten das erfindungsgemäße Verfahren zur Herstellung eines Hohlprofilverbunds bzw. den erfindungsgemäßen Kabelkanal weiterzubilden und auszugestalten. Hierzu wird verwiesen einerseits auf die den Patentansprüchen 1 und 12 nachgeordneten Patentansprüchen, andererseits auf die Beschreibung eines Ausführungsbeispiels in Verbindung mit der Zeichnung. Die Zeichnung zeigt in
- Fig. 1: eine schematische Ansicht einer Vorrichtung zur Durchführung des erfindungsgemäßen Herstellverfahrens gemäß einem ersten Ausführungsbeispiel und
- Fig. 2: in einer schematischen Schnittansicht die Querschnittsformen des Hohlprofils und der Metallfolie eines zweiten Ausführungsbeispiels des erfindungsgemäßen Verfahrens in drei verschiedenen Phasen während der Fertigung.

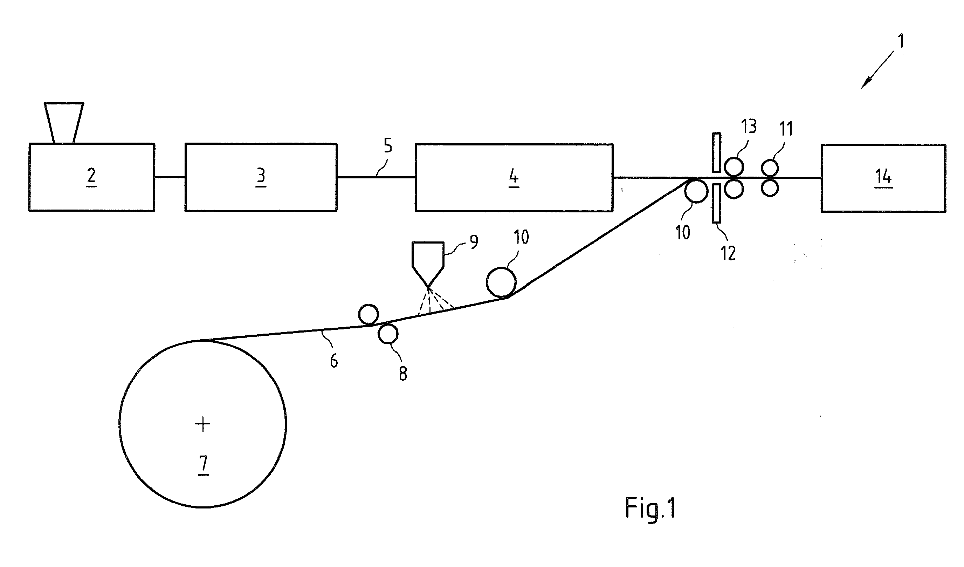

Fig. 1 zeigt nun in einer schematischen Darstellung eine Vorrichtung zur Durchführung eines ersten Ausführungsbeispiels des erfindungsgemäßen Verfahrens zur Herstellung eines Hohlprofilverbunds. Die Vorrichtung 1 umfasst zunächst einen Extruder 2 sowie eine nachgelagerte Kalibrierstation 3 und eine Abkühlungsstation 4, welche in der Regel die Abkühlung des extrudierten Hohlprofils 5 über ein Wasserbad gewährleistet. Zunächst kann erfindungsgemäß die Extrusionsanlage zur Herstellung von Hohlprofilen vom Extruder 2 bis zur Abkühlstation 4 konventionell ausgeführt werden, so dass diesbezüglich relativ geringe Investitionskosten entstehen. Das einfache Extrusionswerkzeug des Extruders 2 formt aus dem in der Regel über 200 °C heißen, zähflüssig gewordenen Kunststoff, zumeist PVC, am Ausgang des Extruders 2 ein Hohlprofil 5 über eine schlitzartige, nicht dargestellte Extruderdüse. PVC wird im Weiteren stets stellvertretend für alle anderen extrudierbaren und für das erfindungsgemäße Verfahren geeigneten Kunststoffe genannt.

Das so entstandene Hohlprofil wird zumeist in einer nachfolgenden Kalibrierstation 3 unter Verwendung von nicht dargestellten Kalibrierwalzen auf Maß kalibriert. Dabei erfolgt bereits eine erste Abkühlung des Hohlprofils 5 in einem ersten Wasserbad. Um das Hohlprofil 5 für die weitere Verarbeitung vorzubereiten, wird es anschließend in einem nächsten Wasserbad auf nahe Raumtemperatur am Ausgang der Abkühlstation 4 heruntergekühlt. Neben der kontinuierlichen Extrusion eines Hohlprofils 5 unter Verwendung des Extruders 2 wird parallel dazu eine Metallfolie 6 von einem Coil 7 abgewickelt. Die Metallfolie 6 ist vorzugsweise eine Aluminiumfolie mit einer Dicke von 0,05 mm bis 0,25 mm, die aus Aluminium oder einer Aluminiumlegierung besteht. Besonders bevorzugt werden die Aluminiumlegierungen vom Typ 1xxx oder 3xxx, insbesondere die AA1050, AA1052, für die Aluminiumfolie verwendet. Die Aluminiumfolie 6 durchläuft dabei zunächst Rollenpaare 8, welche die Aluminiumfolie vorverformen. Es ist aber auch denkbar, dass die Aluminiumfolie 6 bereits leicht vorgeformt angeliefert wird. In der Zeichnung ist zwar nur ein Rollenpaar 8 dargestellt, es wird aber in der Regel eine Mehrzahl von Vorverformungsrollenpaaren verwendet. Nach dem Vorverformen wird entsprechend dem vorliegenden Ausführungsbeispiel des erfindungsgemäßen Verfahrens das Haftmittel über eine Sprühstation 9 auf die vorgeformte Aluminiumfolie 6 aufgebracht. Wie bereits erläutert, kann das Haftmittel auch bereits auf der Aluminiumfolie 6 auf dem Coil 7 aufgebracht sein, so dass entsprechende Behandlungsstationen 9 zur Aufbringung eines Haftmittels überflüssig werden. Die vorgeformte Aluminiumfolie 6 wird unmittelbar nach der Abkühlstation 4 dem extrudierte Hohlprofil 5 über Umlenkrollen 10 zugeführt. Kurz bevor die Aluminiumfolie unter Verwendung der Kaschierrollen 11 auf das extrudierte Profil 5 aufkaschiert wird, wird die Aluminiumfolie 6 durch eine Wärmebehandlungsstation 12 aufgewärmt und unter Verwendung der Rollformwalzen 13 in die endgültige Form gebracht. Dabei kann bereits ein Form- und/oder Kraftschluss zwischen der Metallfolie und dem Hohlprofil erzielt werden. Im Bereich der Aufkaschierwalzen 11 wird nun das extrudierte Kunststoffprofil 5 mit der Aluminiumfolie 6 zusammengepresst, wobei die Wärmebehandlung der Aluminiumfolie 6 auch unmittelbar vor dem Aufkaschieren durch die Kaschierwalzen 11 erfolgen kann.

Während bei dem vorliegenden Ausführungsbeispiel über die Rollformwalzen 13 der Form- und/oder Kraftschluss der Aluminiumfolie 6 mit dem extrudierten Profil 5 hergestellt werden kann, können die Aufkaschierrollen 11 durch ein Zusammenpressen der Aluminiumfolie 6 und des Hohlprofils 5 eine stoffschlüssige Verbindung zwischen Hohlprofil 5 und Aluminiumfolie 6 über das mit Hilfe der Behandlungsstation 9 aufgetragene Haftmittel gewährleisten. Die im Weiteren dargestellte Behandlungsstation 14 ermöglicht einen nächsten Konfektionierungsschritt, beispielsweise das Ausstanzen von bestimmten Löchern. Die Konfektionierungsstation 14 kann jedoch auch für beliebige andere Konfektionierungsschritte verwendet werden. Darüber hinaus ist es vorstellbar, eine Konfektionierungsstation 14 auch direkt an den Ausgang der Abkühlungsstation 4 des extrudierten Hohlprofils vor dem Aufbringen der Aluminiumfolie 6 anzuordnen.

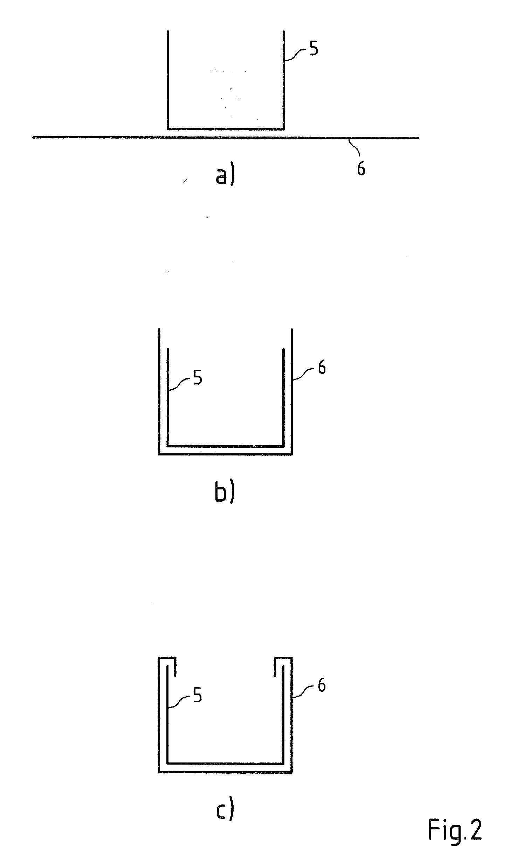

Die Fig. 2 zeigt nun die Herstellung eines erfindungsgemäßen Hohlprofilverbunds gemäß einem zweiten Ausführungsbeispiel der Erfindung schematisch anhand der Querschnittsformen der Aluminiumfolie 6 und des Hohlprofils 5 in drei Stufen. Zunächst wird durch den Extruder ein Hohlprofil 5 aus flüssigem Kunststoff extrudiert. Das Hohlprofil 5 kann, wie dargestellt beispielsweise ein offenes Hohlprofil sein. Die von einem Coil gleichzeitig abgewickelte Aluminiumfolie 6 liegt zu diesem Zeitpunkt beispielsweise noch in planem Zustand vor.

Gemäß Fig. 2b) wird durch einen Vorverformungsschritt die Aluminiumfolie 6 so umgeformt, dass beispielsweise die drei äußeren Oberflächen des Hohlprofils 5 von der Aluminiumfolie 6 abgedeckt werden. Kurz vor dem Aufkaschieren wird nun der Formschluss über zusätzliche Rollformwalzen hergestellt, indem die überstehenden Seiten der Aluminiumfolie 6 um die Seitenwände des extrudierten Hohlprofils 5 gefaltet werden, wie aus Fig. 2c) zu erkennen ist. Unmittelbar anschließend an das Umformen der überstehenden Seitenflächen der Aluminiumfolie 6 wird die Aluminiumfolie auf das Hohlprofil aufkaschiert. Über das zuvor aufgetragenen Haftmittel, welches vorliegend nicht dargestellt ist, wird eine stoffschlüssige Verbindung zwischen dem Hohlprofil 5 und der Aluminiumfolie 6 erzeugt. Die Fig. 2 gibt das Herstellverfahren nur schematisch wieder, denn die Aluminiumfolie liegt nach dem Aufkaschieren in allen Bereichen, in welchen diese Kontakt zum Hohlprofil hat unmittelbar an dem Hohlprofil an.

Wie aus den Ausführungen deutlich wird, wird der erfindungsgemäße Verbund aus einem Hohlprofil und einer Metallfolie bei möglichst niedrigen Temperaturen hergestellt, so dass innere Spannungen oder Ablösungsprozesse aufgrund unterschiedlichem Schrumpfverhalten so gut wie ausgeschlossen sind. Dadurch unterscheidet sich der so hergestellte Hohlprofilverbund von den bisher bekannten Hohlprofilverbunden nicht nur durch seine kostengünstige Herstellungsweise, sondern auch durch seine verbesserten Eigenschaften hinsichtlich Spannungsfreiheit und Festigkeit des Verbindung des Verbundes.

## Patentansprüche

1. Verfahren zur Herstellung eines Hohlprofilverbunds bestehend aus einem Hohlprofil aus Kunststoff und einer mit dem Hohlprofil kraft-, form- und/oder stoffschlüssig verbundenen Metallfolie, insbesondere einer Folie aus Aluminium oder einer Aluminiumlegierung, bei welchem ein Hohlprofil unter Verwendung eines Extrusionsverfahrens zumindest teilweise kontinuierlich extrudiert wird, die Aluminiumfolie von einem Coil abgewickelt wird und zumindest teilweise kontinuierlich auf das Hohlprofil aufgebracht wird,
**dadurch gekennzeichnet, dass**
das Hohlprofil extrudiert wird und das extrudierte Hohlprofil nach dem Kalibrieren und Abkühlen mit der Metallfolie beschichtet wird.

2. Verfahren zur Herstellung eines Hohlprofilverbunds nach Anspruch 1,
**dadurch gekennzeichnet, dass**
die Metallfolie optional vorgeformt wird, unmittelbar nach Abschluss des Extrusionsverfahrens oder nach einem nach dem Extrudieren folgenden Konfektionierungsschritt dem extrudierten Hohlprofil zugeführt wird, durch weiteres Rollformen in eine gewünschte Form gebracht und auf das Hohlprofil aufgebracht wird.

3. Verfahren zur Herstellung eines Hohlprofilverbunds nach Anspruch 1 oder 2,
**dadurch gekennzeichnet, dass** die Metallfolie und/oder das extrudierte Hohlprofil zumindest teilweise auf den jeweiligen Kontaktflächen ein Haftmittel aufweist und die Metallfolie unter Verwendung von Kaschierwalzen auf das Hohlprofil aufkaschiert wird.

4. Verfahren zur Herstellung eines Hohlprofilverbunds nach einem der Ansprüche 1 bis 3,
**dadurch gekennzeichnet, dass**
vor oder nach dem Vorverformen der Metallfolie ein Haftmittel auf die Metallfolie aufgetragen wird.

5. Verfahren zur Herstellung eines Hohlprofilverbunds nach einem der Ansprüche 1 bis 4,
**dadurch gekennzeichnet, dass**
die Metallfolie kurz vor dem Aufkaschieren auf das extrudierte Hohlprofil einer Wärmebehandlung unterzogen wird.

6. Verfahren zur Herstellung eines Hohlprofilverbunds nach einem der Ansprüche 1 bis 5,
**dadurch gekennzeichnet, dass**
durch die zusätzliche Wärmebehandlung nur die zur Aktivierung des Haftmittels notwendige Wärmeenergie in die Metallfolie eingebracht wird.

7. Verfahren zur Herstellung eines Hohlprofilverbunds nach einem der Ansprüche 1 bis 6,
**dadurch gekennzeichnet, dass**
als Haftmittel ein Haftvermittler, ein Kleber, ein Lack und/oder ein Primer oder eine Klebefolie verwendet wird.

8. Verfahren zur Herstellung eines Hohlprofilverbunds nach einem der Ansprüche 1 bis 7,
**dadurch gekennzeichnet, dass** nach dem Aufkaschieren der Metallfolie der Hohlprofilverbund auf Länge geschnitten und/oder weiteren Fertigungs- und/oder Konfektionierungsschritten unterzogen wird.

9. Verfahren zur Herstellung eines Hohlprofilverbunds nach einem der Ansprüche 1 bis 8,
**dadurch gekennzeichnet, dass**
als Metallfolie eine Aluminiumfolie mit einer Dicke von 0,03 mm bis 1 mm, vorzugsweise 0,05 mm bis 0,25 mm verwendet wird.

10. Verfahren zur Herstellung eines Hohlprofilverbunds nach einem der Ansprüche 1 bis 9,
**dadurch gekennzeichnet, dass**
die Aluminiumfolie aus einer Aluminiumlegierung vom Typ 1xxx oder vom Typ 3xxx, insbesondere einer Legierung vom Typ AA1050 oder AA1052, besteht.

11. Verfahren zur Herstellung eines Hohlprofilverbunds nach einem der Ansprüche 1 bis 10,
**dadurch gekennzeichnet, dass**
offene oder geschlossene Hohlprofile, insbesondere Kabelkanäle, Brüstungskanäle oder Rollladenstäbe extrudiert werden.

12. Kabelkanal aus extrudiertem Kunststoff hergestellt nach einem Verfahren gemäß Anspruch 1 bis 11,
**dadurch gekennzeichnet, dass**
der Kabelkanal zumindest auf einer seiner nach außen weisenden Oberflächen eine Metallfolie, insbesondere eine Aluminiumfolie, aufweist.

13. Kabelkanal aus extrudiertem Kunststoff nach Anspruch 12,
**dadurch gekennzeichnet, dass** die Aluminiumfolie aus einer der Aluminiumlegierungen vom Typ 1xxx oder 3xxx, insbesondere eine Aluminiumlegierung vom Typ AA1050 oder AA1052, besteht.

14. Kabelkanal aus extrudiertem Kunststoff nach Anspruch 12 oder 13,
**dadurch gekennzeichnet, dass**
der Kabelkanal Anschlussmittel zur Erdung der auf der zumindest einen äußeren Oberfläche angeordneten Metallfolie aufweist.
